# EUROPÄISCHE PATENTANMELDUNG

(11) **EP 3 156 824 A1**
(43) Veröffentlichungstag der Anmeldung: **19.04.2017**
(21) Anmeldenummer: 15189402.9
(22) Anmeldetag: 12.10.2015
(51) Int. Cl.: G01S 17/89, G01S 7/481

(54) **TOF ENTFERNUNGSSENSOR MIT 3FACH-PLATINE**

(71) Anmelder: Cedes AG, 7302 Landquart (CH)
(72) Erfinder: HEGELBACH, Jürg, 9451 Kriessern (CH); TRIET, Philipp, 7310 Bad Ragaz (CH); DORT, Marcel, 8890 Flums (CH); HALDNER, Roland, 8888 Heiligkreuz (CH); VINCENZ, Curdin, 7159 Andiast (CH)
(74) Vertreter: Otten, Roth, Dobler & Partner mbB Patentanwälte

(57) **Zusammenfassung**

TOF Entfernungssensor zur Messung einer Entfernung zu einem Objekt und/oder zur Erzeugung eines 3D-Bildes umfassend eine Strahlungsquelle zum Aussenden von modulierter Strahlung und eine Empfangseinrichtung die in vorbestimmtem räumlichen Bezug zur Strahlungsquelle steht zum Empfang von vom Objekt reflektierter Strahlung mit einer Pixelmatrix und eine Elektronikeinrichtung zur Ansteuerung der Strahlungsquelle und zur Auswertung der Pixelmatrix in Abhängigkeit zur modulierten Strahlung, wobei der TOF Entfernungssensor eine erste Platine zur Aufnahme und Ansteuerung der Strahlungsquelle und eine zweite Platine zur Aufnahme und Auswertung der Pixelmatrix und eine dritte Platine zur Verbindung nach ausserhalb umfasst.

## Beschreibung

Die Erfindung betrifft einen TOF (Time of Flight) Entfernungssensor.

Aus dem Stand der Technik ist nach EP2 453 252 B1 der Anmelderin ein gattungsbildender TOF Entfernungssensor bekannt, der eine Strahlungsquelle, eine Empfangseinrichtung und eine Elektronikeinrichtung aufweist.

Es ist Aufgabe der Erfindung, den Stand der Technik weiter zu bilden, insbesondere die Bauform zu verkleinern.

Diese Aufgabe wird durch einen TOF Entfernungssensor nach Anspruch 1 gelöst. Vorteilhafte Ausgestaltungen sind in den weiteren Unteransprüchen angegeben.

Der erfindungsgemässe TOF Entfernungssensor dient zur Messung einer Entfernung zu einem Objekt und/oder zur Erzeugung eines 3D-Bildes und umfasst eine Strahlungsquelle zum Aussenden von modulierter Strahlung sowie eine Empfangseinrichtung die in vorbestimmtem räumlichen Bezug zur Strahlungsquelle steht zum Empfang von vom Objekt reflektierter Strahlung mit einer Pixelmatrix sowie eine Elektronikeinrichtung zur Ansteuerung der Strahlungsquelle und zur Auswertung der Pixelmatrix in Abhängigkeit zur modulierten Strahlung. Insbesondere umfasst der erfindungsgemässe TOF Entfernungssensor eine erste Platine zur Aufnahme und Ansteuerung der Strahlungsquelle und eine zweite Platine zur Aufnahme und Auswertung der Pixelmatrix und eine dritte Platine zur elektrischen Verbindung nach ausserhalb des TOF Sensors.

Die Abstandserkennung des TOF Entfernungssensors basiert auf der Laufzeitmessung der ausgesandten Lichtmodulationen, insbesondere auf der Messung der Phasenverschiebung zwischen der Modulation des ausgesandten und des reflektieren und detektierten Lichts.

Die Ausprägung der Elektronikeinrichtung in den 3 Platinen kann die Bauform des TOF Entfernungssensors klein halten und gleichzeitig wegen der spezifischen Aufteilung die nötigen Verbindungen zwischen den Platinen klein halten. Zudem kann die Reduktion von Störstrahlung zwischen den Baugruppen der Elektronikeinrichtung erreicht werden. Zudem kann die Möglichkeit selektiverer Testung und damit eine höhere Sicherheit der Elektronikeinheit erreicht werden. Zudem kann eine höhere Modularität des Aufbaus umgesetzt werden und so der Ersatz defekter Teile erleichtert werden.

Vorzugsweise umfasst die erste Platine eine Strahlungsquelle mit mindestens einem Halbleiterlaser. Vorzugsweise umfasst die erste Platine weiterhin einen Treiber zur Ansteuerung der Strahlungsquelle. Vorzugsweise umfasst die erste Platine weiterhin eine Elektronikeinheit zur Spannungsaufbereitung. Insbesondere ist die Strahlungsquelle als ein oder mehrere VCSEL Halbleiterlaser ausgebildet. Insbesondere strahlt die Strahlungsquelle im Infrarot.

Die Zuordnung der genannten Elemente zur ersten Platine erlaubt es, die zugeordneten Leitungslängen kurz zu halten und die Störstrahlung der Leiterbahnen zu minimieren.

Vorzugsweise umfasst die zweite Platine die Pixelmatrix umfasst und ein IC, insbesondere einen Mikroprozessor oder ein FPGA zur Auswertung der Pixelmatrix.

Die Zuordnung der genannten Elemente zur zweiten Platine erlaubt es, die zugeordneten Leitungslängen kurz zu halten und die Störstrahlung der Leiterbahnen zu minimieren.

Vorzugsweise umfasst die dritte Platine eine Elektronikeinheit zur Schnittstellensteuerung nach ausserhalb und/oder eine Elektronikeinheit zur Spannungsaufbereitung und/oder einen gemeinsamen Mikroprozessor zur Spannungsaufbereitung und zur Schnittstellensteuerung nach aussen, insbesondere einen ACIC.

Die Zuordnung der genannten Elemente zur zweiten Platine erlaubt es, die zugeordneten Leitungslängen kurz zu halten und die Störstrahlung der Leiterbahnen zu minimieren.

Vorzugsweise sind die erste, die zweite und die dritte Platine parallel übereinander angeordnet und/oder so gestaltet, dass sie gleiche Breite aufweisen und/oder so angeordnet, dass sie mit ihren Seitenkanten senkrecht übereinander liegen und/oder so gestaltet, dass sie mit ihren Umrissen innerhalb des Umrisses der zweiten Platine liegen und/oder auf einem gemeinsamen Träger angeordnet und/oder innerhalb eines gemeinsamen Gehäuses angeordnet und/oder mittels Stecker/Buchse-Paaren elektrisch verbunden.

Die genannte Ausprägung der Platinen erlaubt eine höherer Modularität des Aufbaus und damit eine selektivere Testung und damit eine höhere Sicherheit der Elektronikeinrichtung.

Weitere Merkmale der Erfindung sind in den Zeichnungen angegeben.

Die Erfindung wird im Folgenden an einem Ausführungsbeispiel mit Zeichnungen näher erläutert. Gleiche Bezugszeichen in den einzelnen Figuren bezeichnen dabei gleiche Elemente. Es zeigt
- Fig. 1: den TOF Entfernungssensor ohne Gehäuse,
- Fig. 2: den TOF Entfernungssensor mit Gehäuse.

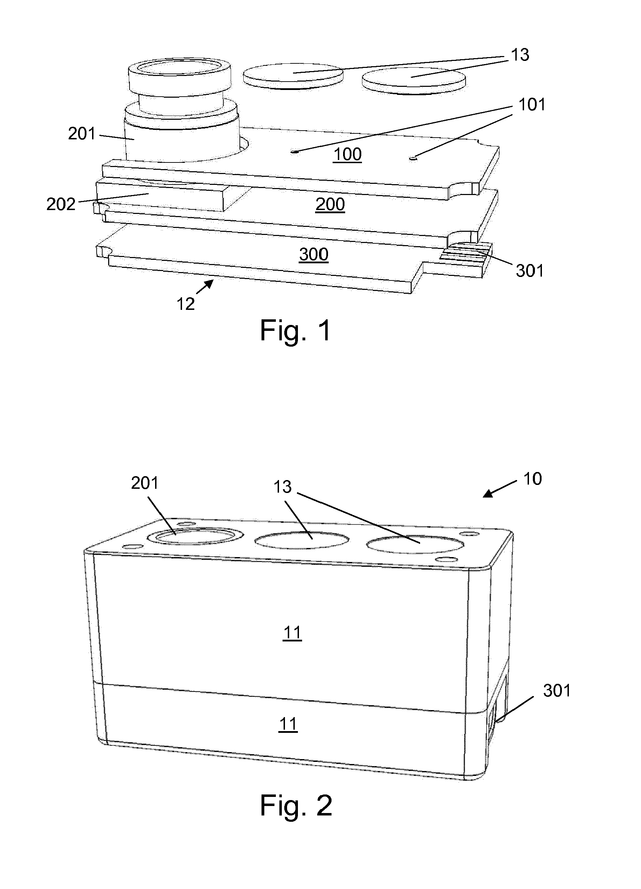

Fig. 1 zeigt den TOF Entfernungssensor 10 ohne Gehäuse. Die drei Platinen 100, 200 und 300 sind übereinander angeordnet und schliessen an den Seiten parallel übereinander ab. Die Elektronikkomponenten sind nicht gezeigt. Auf der ersten Platine 100 sind an den zwei Punkten 101 jeweils VCSEL Halbleiterlaser so angeordnet, dass diese senkrecht zur ersten Platine durch die zugeordneten Sendeoptiken 13 strahlen. Auf der zweiten Platine 200 ist nicht sichtbar die Pixelmatrix 202 unter der ebenfalls auf der zweiten Platine angeordneten Empfangsoptik 201 angeordnet. Die erste Platine weiset eine randoffene Ausnehmung für die Sendeoptik auf. An der Dritten Platine ist ein Schnittstellenstecker 301 implementiert.

Fig. 2 zeigt den TOF Entfernungssensor 10 mit Gehäuse 11. Die Sendeoptiken 13 und die Abschlussoptik der Empfangsoptik 201 sind im Wesentlichen plan in die Oberfläche des Gehäuses 11 integriert.

Die gezeigte Ausführung des TOF Entfernungssensors weist hier eine Strahlungsquelle bestehend aus zwei VCSEL Halbleiterlasern auf. Der TOF Entfernungssensor kann auch mit nur einem VCSEL Halbleiterlaser und nur einer Sendeoptik ausgeführt sein.

### Bezugszeichenliste:

- 10: TOF Entfernungsensor
- 11: Gehäuse
- 12: Elektronikeinrichtung
- 13: Sender-Optik

- 100: erste Platine
- 101: VCSEL Halbleiterlaser

- 200: zweite Platine
- 201: Empfangs-Optik
- 202: Pixelmatrix

- 300: dritte Platine
- 301: Schnittstelle

## Patentansprüche

1. TOF Entfernungssensor (12)
- zur Messung einer Entfernung zu einem Objekt und/oder zur Erzeugung eines 3D-Bildes umfassend
- eine Strahlungsquelle (101)
- zum Aussenden von modulierter Strahlung,
- eine Empfangseinrichtung (201)
- die in vorbestimmtem räumlichen Bezug zur Strahlungsquelle steht
- zum Empfang von vom Objekt reflektierter Strahlung
- mit einer Pixelmatrix (202), und
- eine Elektronikeinrichtung (12)
- zur Ansteuerung der Strahlungsquelle und
- zur Auswertung der Pixelmatrix in Abhängigkeit zur modulierten Strahlung **dadurch gekennzeichnet, dass** der TOF Entfernungssensor
- eine erste Platine (100) zur Aufnahme und Ansteuerung der Strahlungsquelle und
- eine zweite Platine (200) zur Aufnahme und Auswertung der Pixelmatrix und
- eine dritte Platine (300) zur Verbindung nach ausserhalb umfasst.

2. TOF Entfernungssensor nach Anspruch 1,
**dadurch gekennzeichnet, dass**
- die erste Platine
- eine Strahlungsquelle mit mindestens einem Halbleiterlaser, insbesondere mindestens einem VCSEL Halbleiterlaser umfasst und/oder
- einen Treiber zur Ansteuerung der Strahlungsquelle umfasst und/oder
- eine Elektronikeinheit zur Spannungsaufbereitung umfasst.

3. TOF Entfernungssensor nach einem der vorhergehenden Ansprüche,
**dadurch gekennzeichnet, dass**
- die zweite Platine
- die Pixelmatrix umfasst und
- einen IC, insbesondere einen Mikroprozessor oder ein FPGA zur Auswertung der Pixelmatrix umfasst.

4. TOF Entfernungssensor nach einem der vorhergehenden Ansprüche,
**dadurch gekennzeichnet, dass**
- die dritte Platine
- eine Elektronikeinheit zur Schnittstellensteuerung nach ausserhalb und/oder
- eine Elektronikeinheit zur Spannungsaufbereitung und/oder
- einen gemeinsamen Mikroprozessor zur Spannungsaufbereitung und zur Schnittstellensteuerung nach aussen, insbesondere einen ACIC, umfasst.

5. TOF Entfernungssensor nach einem der vorhergehenden Ansprüche,
**dadurch gekennzeichnet, dass**
- die drei Platinen
- parallel übereinander angeordnet sind und/oder
- die gleiche Breite aufweisen und/oder
- mit ihren Seitenkanten senkrecht übereinander liegen und/oder
- mit ihren Umrissen innerhalb des Umrisses der zweiten Platine sind und/oder
- auf einem gemeinsamen Träger angeordnet sind und/oder
- innerhalb eines gemeinsamen Gehäuses (11) angeordnet sind und/oder
- mittels Stecker/Buchse-Paaren elektrisch verbunden sind.
